# EUROPEAN PATENT APPLICATION

(11) **EP 1 443 443 A2**
(43) Date of publication of application: **04.08.2004**
(21) Application number: 04001837.6
(22) Date of filing: 28.01.2004
(51) Int. Cl.: G06F 17/60

(54) **Remote negotiation apparatus**

(30) Priority: 28.01.2003 JP 2003018809
(71) Applicant: Mazda Motor Corporation, Aki-gun, Hiroshima 730-8670 (JP)
(72) Inventor: Yamasaki, Shinya, Aki-gun Hiroshima 730-8670 (JP)
(74) Representative: Müller-Boré & Partner Patentanwälte

(57) **Abstract**

In preparing a commercial transaction document by remote negotiation, the same window of a predetermined format is presented on both a salesperson terminal (6) used by a salesperson and a user terminal (5) used by a customer. As necessary information contents are input on the salesperson terminal (6), the input information contents are also reflected to the user terminal (5). The customer and salesperson can recognize the information contents in real time. Hence, the commercial transaction document is prepared while the customer and salesperson properly recognize items to which both parties have agreed as detailed information contents on the windows corresponding to the commercial transaction document.

## Description

### FIELD OF THE INVENTION

The present invention relates to the technical field of a remote negotiation system in which a provider who provides merchandise or a service and a receiver who receives it negotiate through various communication lines.

### BACKGROUND OF THE INVENTION

Conventionally, techniques are proposed in which a provider who provides merchandise or a service and a receiver who receives it do negotiation (remote negotiation) through various communication lines without actually facing each other (e.g., Japanese Patent Laid-Open Nos. 2002-183583 and 2002-215944).

These prior arts describe the basic concept of remote negotiation but do not sufficiently disclose any detailed system configuration for implementation.

In the above remote negotiation systems, generally, a salesperson and a customer negotiate without actually facing each other. During the negotiation, the communication means used imposes restrictions on communication between them. Hence, it is not easy that, e.g., an item that is calling attention of one party at a certain timing should also be surely grasped by the other party in real time. In conventional face-to-face negotiation between able-bodied people, they negotiate while recognizing confirmation of talked-about items by appropriately using visual sense and auditory sense. In remote negotiation, however, communication errors or poor explanations (lack of communication) between the salesperson and the customer occur while none is conscious. This may lead to eventual failure in preparing so-called documents necessary for commercial transactions, including estimates, purchase orders, and contracts.

In recent years, a so-called BTO (Built To Order) system is becoming popular, in which a user can select merchandise with desired specifications for himself/herself and order the selected merchandise with desired specification by using a home operation terminal through a communication environment such as the Internet. Since the sales price is decided in advance in accordance with selected specification items, the user can buy the merchandise with desired specifications by using this system without face-to-face negotiation with a salesperson.

The above BTO system is effective for merchandise, such as personal computers, in a price range that customers can relatively easily afford. However, for merchandise such as cars which are used by customers for a long time after the purchase, the merchandise is expensive for ordinary users, and they tend to enjoy the series of purchase processes themselves, including selection of desired merchandise, purchase contract, and delivery. For this reason, even in a BTO system that sells cars, face-to-face negotiation for, e.g., the price between the salesperson and the customer (prospective buyer) is regarded as very important in the series of purchase processes as before.

If the efficiency for both the salespersons (providers) and the customers (receivers) is taken into consideration, even face-to-face negotiation for relatively expensive merchandise such as cars is preferably done as remote negotiation through a communication environment. However, when remote negotiation is done by using the conventional remote negotiation system, preparation of documents necessary for commercial transactions may fail, as described above. Salespersons who sell merchandise want to win orders while properly reaching agreements in real time, as in conventional face-to-face negotiation, even in remote negotiation during the series of sales processes from price negotiation to purchase contract with customers as prospective buyers.

### SUMMARY OF THE INVENTION

It is an object of the present invention to prepare an appropriate commercial transaction document when a provider who provides merchandise or a service and a receiver who receives it do remote negotiation through a communication environment.

Accordingly, one aspect of the present invention provides a remote negotiation apparatus which causes, before providing merchandise including a service (e.g., a vehicle and various maintenance services for it), a provider (e.g., a salesperson) of the service and a receiver (e.g., a prospective buyer or user) to do remote negotiation through a communication environment, comprising:
a control unit which displays a window of a predetermined format corresponding to a commercial transaction document related to providing of the merchandise on both a first operation terminal (6) used by the provider and a second operation terminal (5) used by the receiver and, as information contents necessary for finishing the commercial transaction document are input by the provider to the window displayed on the first operation terminal (6), reflects the input information contents to the window displayed on the second operation terminal(5) to present the information contents to the receiver.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a view showing the system configuration of a remote negotiation system according to the first embodiment;
Fig. 2 is a flow chart showing remote negotiation processing in the remote negotiation system according to the first embodiment;
Fig. 3 is a view showing a display window which is displayed on a salesperson terminal 6 in the remote negotiation processing according to the first embodiment;
Fig. 4 is a view showing a display window which is displayed on a user terminal 5 in the remote negotiation processing according to the first embodiment;
Fig. 5 is a flow chart of commercial transaction document preparation processing according to the first embodiment;
Fig. 6 is a flow chart of commercial transaction document preparation processing according to the first embodiment;
Fig. 7 is a flow chart of commercial transaction document preparation processing according to the second embodiment; and
Fig. 8 is a flow chart of commercial transaction document preparation processing according to the second embodiment.

### DETAILED DESCRIPTION OF THE PREFERRED EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

Embodiments will be described below in detail with reference to the accompanying drawings, in which a remote negotiation apparatus (remote negotiation system) according to the present invention is applied to remote negotiation related to the sales of a car (including various services such as automobile inspection and routine check) as an example of merchandise. In the embodiments, various documents (paper documents) necessary for commercial transactions, such as estimates, contracts, and purchase orders, will be collectively called "commercial transaction documents".

### [First Embodiment]

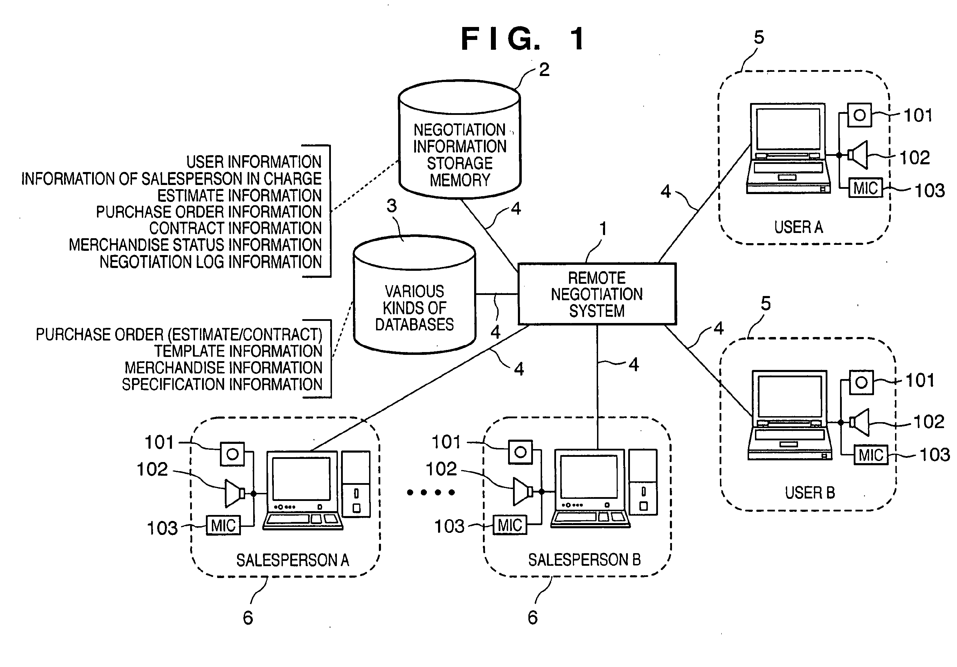

Fig. 1 is a view showing the system configuration of a remote negotiation system according to the first embodiment.

Referring to Fig. 1, a remote negotiation system 1, user terminals 5 used by customers (user A, user B,...), and salesperson terminals 6 used by salespersons (salesperson A, salesperson B,...) are connected so that two-way communication can be executed through a communication network (to be simply referred to as a network hereinafter) 4 such as the Internet or an intranet as an example of a communication line.

The remote negotiation system 1 is a general term for remote negotiation system software programs which are executed in a remote negotiation system server (not shown) and operation terminals 5 and 6 connected to the network 4. The network is not limited to the Internet or intranet and can include any other communication infrastructures.

In this embodiment, the salesperson A, salesperson B,... are providers of merchandise, i.e., cars. The user A, user B,... are receivers who receive the merchandise.

Each of the user terminals (second operation terminals) 5 and salesperson terminals (first operation terminals) 6 are an information processing apparatus (operation terminal) such as a personal computer that has, e.g., a photographing function, voice output function, and voice input function, as shown in Fig. 1. Each operation terminal has a photographing device (camera) 101, speaker 102, and microphone 103. When remote negotiation processing (to be described later) is executed in the remote negotiation system 1, the user terminal 5 and salesperson terminal 6 are connected in a remote negotiable state.

In place of a desktop information processing apparatus shown in Fig. 1, an information terminal such as a PDA (Personal Digital Assistant) or cellular phone may be employed as each of the user terminals 5 and salesperson terminals 6. A detailed description of hardware in this embodiment will be omitted.

In this embodiment, the user terminal 5 and salesperson terminal 6 transmit or receive data through the network 4 in accordance with general communication protocol software (software program). The terminals have software programs for, e.g., an Internet browser function, mail function, and drawing function. When these software programs are appropriately executed by a CPU (not shown), the user terminal 5 and salesperson terminal 6 are connected in a remote negotiable state through the network 4 while being connected to (e.g., logged in to) the remote negotiation system 1. The communication means in these apparatuses employs a general arrangement, and a detailed description thereof will be omitted in this embodiment.

The remote negotiation system 1 can access a negotiation information storage memory (database) 2 and various kinds of databases (to be simply referred to as a database hereinafter) 3 to read or write the contents of the databases.

In the negotiation information storage memory (database) 2, the following pieces of information are registered in correspondence with each user.
· User information: information that specifies a customer (prospective buyer or existing user)
· Salesperson information: information about a person in charge of sales, who sells cars by using this system
· Estimate information: information about an estimate prepared for the customer
· Purchase order information: information about a purchase order prepared for the customer
· Contract information: information about a contract prepared for the customer
· Merchandise status information: information about the progress of negotiation with the customer and the progress until delivery after the contract
· Negotiation log information: log information about negotiation with the customer

In the database (DB) 3, the following pieces of information are registered in advance.
· Commercial transaction document template information: document (paper document) information of predetermined formats for estimates, contracts, and purchase orders prepared in remote negotiation
· Merchandise information: information (including image information) about merchandise such as cars that can be sold by using this system and contending vehicles
· Specification information: detailed specification information of merchandise such as cars that can be selected by using this system
· Catalog information: catalog information of merchandise such as cars that can be sold by using this system

In this embodiment, a system configuration in which the remote negotiation system 1 accesses two databases, i.e., the negotiation information storage memory (database) 2 and DB 3, as described above, will be described for the descriptive convenience. However, the present invention is not limited to this system configuration. A system configuration in which all pieces of information are stored in a large-scale database together may be employed.

The processing of the entire system will be described below mainly on the basis of the operation of the remote negotiation system 1.

In this embodiment, an example will be described in which as remote negotiation processing to be described below is executed in the remote negotiation system 1, necessary man-machine interfaces (user interfaces) such as display windows are provided using, e.g., the Internet browser function in the user terminal 5 and salesperson terminal 6 by using data based on a predetermined data format (e.g., HTML: HyperText Markup Language or XML: extensible Markup Language) received from the remote negotiation system 1 through a communication line such as the network 4.

However, the remote negotiation processing system according to this embodiment is not limited to this system configuration. Some or all of processing operations to be described below may be executed in at least one of the user terminal 5 and salesperson terminal 6.

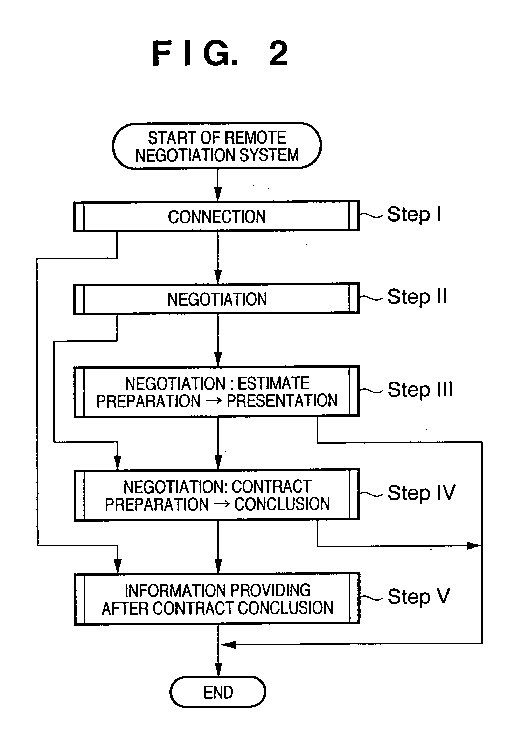

Fig. 2 is a flow chart showing the remote negotiation processing of the remote negotiation system according to the first embodiment. Fig. 2 shows the operation procedures of the software program in the remote negotiation system.

Referring to Fig. 2, step I (connection): When a predetermined connection request operation from the user terminal 5 or salesperson terminal 6 is detected, at least two operation terminals to be connected with each other are set in a remote negotiable state. For the connection processing itself in this step, general procedures can be employed, and a detailed description thereof will be omitted in this embodiment. The flow can advance from this step to step II (if no purchase contract has been made yet) or step V (if a purchase contract has already been made) in accordance with a predetermined operation.

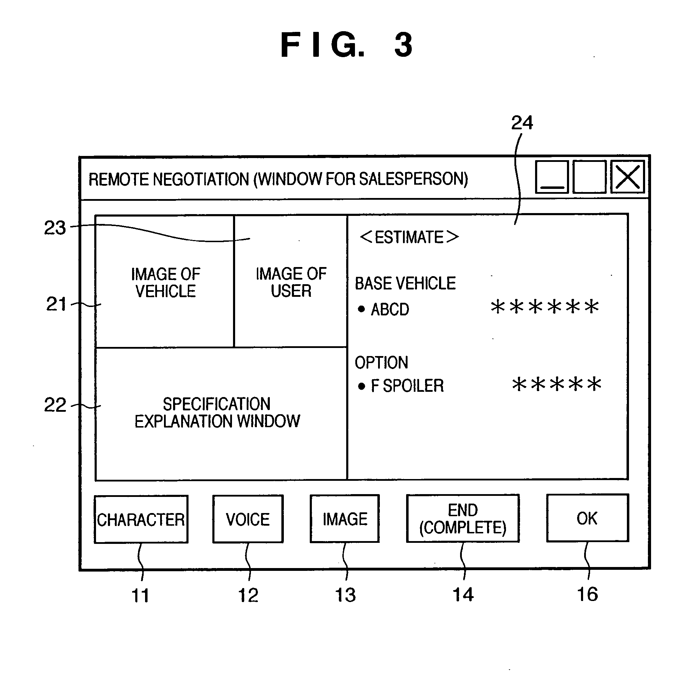

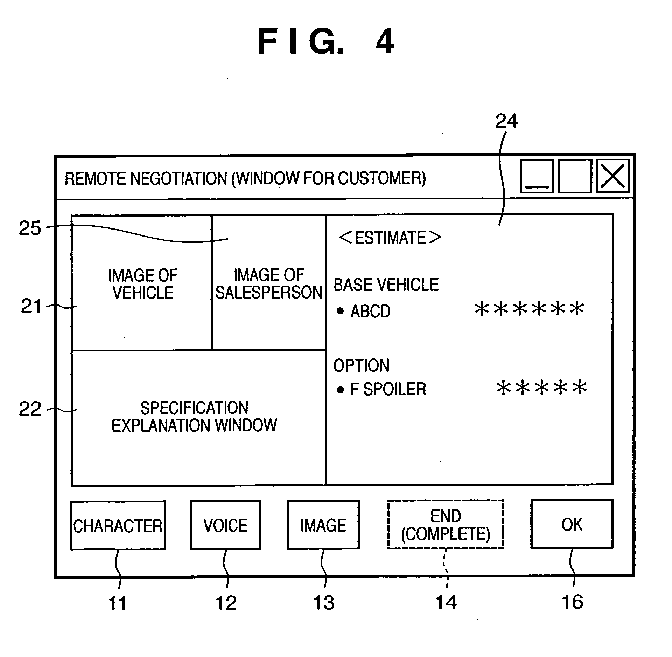

Step II (negotiation or start of negotiation): Between the user terminal 5 and the salesperson terminal 6 which are connected through the communication line in step I, the photographing device (camera) 101, speaker 102, microphone 103, and display window (display areas 23 and 25 in display windows shown in Figs. 3 and 4 to be described later), which are arranged in the respective operation terminals, appropriately function to start real-time remote negotiation between the customer who uses the user terminal 5 and the salesperson who uses the salesperson terminal 6. The customer and salesperson can have various conversations (explanation of the specifications and negotiation over the price), as in conventional face-to-face negotiation. The flow can advance from this step to step III (if an estimate must be prepared) or step IV (if a contract must be prepared) in accordance with a predetermined operation.

Step III (negotiation: estimate preparation → presentation): On the basis of the customer's needs and various conditions confirmed in the remote negotiation in step II, the salesperson prepares an estimate for a formal contract of commercial transaction documents about the car (merchandise) demanded by the customer as the other party of negotiation by using the display window shown in Fig. 3 (to be described later). In the process for preparing the estimate, an estimate with the same contents is presented to the customer on the display window shown in Fig. 4 (to be described later). The flow can advance from this step to step IV (when a contract can be prepared), or the remote negotiation can be ended (if the customer should examine the presented estimate) in accordance with a predetermined operation.

Step IV (negotiation: contract preparation → conclusion): When the customer agrees to the contents of the estimate presented in step III and indicates his/her willingness to purchase, the salesperson prepares a contract (purchase order) of commercial transaction documents about the car (merchandise) demanded by the customer as the other party of negotiation by using the display window shown in Fig. 3 (to be described later). In addition, the salesperson concludes a sales contract based on the contents of the contract with the customer. In the process for preparing the contract, a contract with the same contents is presented to the customer on the display window shown in Fig. 4 (to be described later). The flow can advance from this step to step V, or the remote negotiation can be ended in accordance with a predetermined operation.

Step V (information providing after contract conclusion): When the purchase contract has already been made in step IV, the customer can receive information (e.g. information about the progress until delivery and procedures in public institutions) about the vehicle of the purchase contract. Such information providing is done in accordance with the contents of an inquiry by real-time conversations with the salesperson or automatic response.

The processing procedures in steps III and IV of the above-described remote negotiation processing (Fig. 2) will be described next in detail with reference to Figs. 3 to 6.

Fig. 3 is a view showing a display window which is displayed on the salesperson terminal 6 in the remote negotiation processing according to the first embodiment. Fig. 4 is a view showing a display window which is displayed on the user terminal 5 in the remote negotiation processing according to the first embodiment. Display of the display windows is started when the user terminal 5 and salesperson terminal 6 are set in the remote negotiable state through the remote negotiation system 1 in step I described above.

The display windows shown in Figs. 3 and 4 are used by the salesperson and the customer for smooth remote negotiation based on their agreements and common recognitions. Hence, the pieces of information included in the display windows basically have the same contents.

In the display windows shown in Figs. 3 and 4, the image of the vehicle as the subject of the remote negotiation is displayed in a display area 21 by using information read out from the database 3. The explanation of specifications of the vehicle is displayed in a display area 22 by using information read out from the database 3.

The image of the customer (i.e., the user of the user terminal 5) photographed by the photographing device 101 arranged in the user terminal 5 is displayed in the display area 23. The image of the salesperson (i.e., the salesperson who uses the salesperson terminal 6) photographed by the photographing device 101 arranged in the salesperson terminal 6 is displayed in the display area 25.

A predetermined format of a commercial transaction document (estimate or contract) to be prepared is displayed in a display area 24 by using information read out from the database 3.

In the display windows shown in Figs. 3 and 4, operation buttons (software buttons) 11 to 13 ("character", "voice", and "image") are used as a selection means for selecting at least one of characters, voice, and image as a detailed form of communication between the customer and the salesperson in the remote negotiation between the user terminal 5 and the salesperson terminal 6. When each of the user terminal 5 and salesperson terminal 6, which are connected in a remote negotiable state, has the photographing device 101, speaker 102, and microphone 103, as shown in Fig. 1, more realistic face-to-face negotiation can be done during the remote negotiation by operating (clicking on) all the operation buttons.

An operation button (software button) 14 (end (complete)) is displayed at least on the salesperson terminal 6 (in then second embodiment, the operation button 14 is displayed even on the user terminal 5). When the operation button is operated (clicked on), and then, an OK button 16 is operated, preparation of a commercial transaction document based on the information contents input so far is ended. The input information contents are stored in the storage area for the customer in the negotiation information storage memory (database) 2 together with information that specifies the salesperson in charge.

In steps III and IV, commercial transaction document preparation processing to be described below is executed by using the remote negotiation display windows (Figs. 3 and 4) having the above display contents.

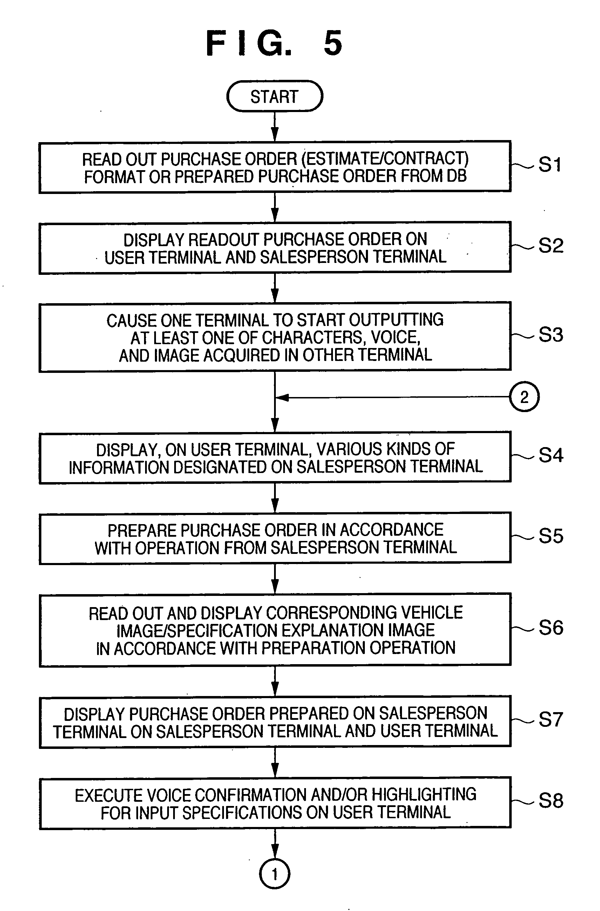

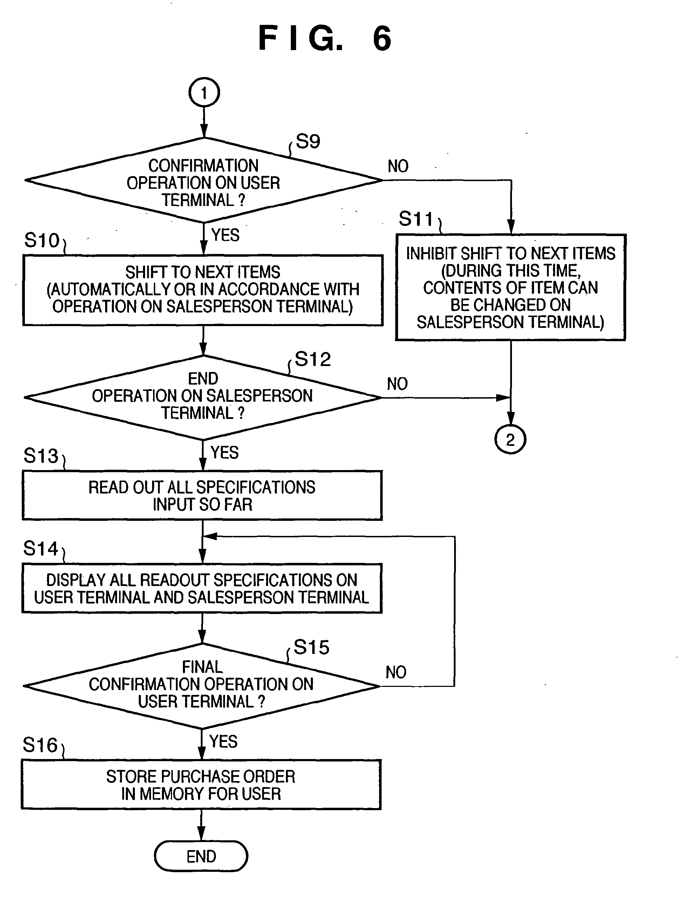

Figs. 5 and 6 are flow charts of commercial transaction document (estimate or contract) preparation processing according to the first embodiment. Figs. 5 and 6 show details of steps III and IV of the remote negotiation processing (Fig. 2).

Referring to Fig. 5, step S1: The template information of a predetermined format of a commercial transaction document (estimate or contract (purchase order)) to be prepared is read out from the database 3 in accordance with a predetermined operation on the salesperson terminal 6.

Step S2: The template information read out in step S1 is provided to the user terminal 5 and salesperson terminal 6 so that display of the same commercial transaction document is started in the display areas 24 of the user terminal 5 and salesperson terminal 6. When the commercial transaction document has already been prepared for the customer, estimate information, purchase order information, or contract information in the negotiation information storage memory (database) 2 is read out in accordance with a predetermined operation on, e.g., the salesperson terminal 6 so that the prepared commercial transaction document is displayed.

Step S3: In accordance with the selection state of the above-described operation buttons 11 to 13 ("character", "voice", and "image") in Figs. 3 and 4, one operation terminal starts outputting, through the display window or the speaker 102, at least one of character information, voice information, and image information acquired in the other operation terminal.

Step S4: Various kinds of information such as specification information or optional parts corresponding to the vehicle grade designated by the salesperson on the salesperson terminal 6, or desired individual information in a BTO system are appropriately read out from the database 3. The readout pieces of information are displayed in one of the display areas of the salesperson terminal 6. When the pieces of information are provided to the user terminal 5, they are also displayed in a corresponding area of the user terminal 5.

Steps S5 and S6: In accordance with the input operation on the salesperson terminal 6, information contents (information items) on the commercial transaction document to be prepared are set (step S5). In accordance with the input operation, a corresponding vehicle image or specification explanation image is displayed in a corresponding display area of the user terminal 5 (step S6).

Step S7: In accordance with the input operation on the salesperson terminal 6, the same information contents (information items) of the commercial transaction document to be prepared are displayed in the display areas 24 on the display windows (Figs. 3 and 4) of the salesperson terminal 6 and user terminal 5.

Step S8: Voice output or highlighting is done to call the customer's attention to the information contents (information items) displayed on the user terminal 5 in step S7.

Step S9: When the OK button 16 on the user terminal 5 is operated as a confirmation operation for the voice output or highlighting in step S8, the information contents (information items) that are confirmed are additionally temporarily stored (provisionally stored) in the area for the customer in the negotiation information storage memory (database) 2 as estimate information, purchase order information, or contract information. Then, the flow advances to step S10. If the confirmation operation is not executed, the flow advances to step S11.

Step S10: Since the confirmation operation is detected in step S9, a shift to the next information contents (information items) in the commercial transaction document to be prepared is permitted by, e.g., changing the display position of the prompt automatically or in accordance with a predetermined operation on the salesperson terminal 6.

Step S11: Since the confirmation operation is not detected in step S9, the shift to the next information contents (information items) is restricted to the contrary to step S10. The flow returns to step S4. At this time, information contents of interest can be changed in the user terminal 5 and salesperson terminal 6.

Step S12: When the operation button 14 is operated (clicked on) on the display window (Fig. 3) of the salesperson terminal 6 to indicate that input to the commercial transaction document to be prepared is completed (ended), the flow advances to step S13. Otherwise, the flow returns to step S4.

Steps S13 and S14: Since the completion of preparation of the commercial transaction document is confirmed in step S12, all the information contents (information items) input so far are read out at once from the estimate information, purchase order information, or contract information in the negotiation information storage memory (database) 2 (step S13). On the basis of the readout information, the finished commercial transaction document is displayed on the user terminal 5 and salesperson terminal 6 (step S14). In displaying the information in step S14, if the display contents on both operation terminals are the same, the display of the display areas 24 of the display windows (Figs. 3 and 4) of both operation terminals may be updated. Alternatively, all the pieces of information may be displayed at once on new display windows.

Step S15: When, e.g., the OK button 16 is operated on the display window (Fig. 4) of the user terminal 5 to execute the final confirmation operation for the contents of the finished commercial transaction document, which are displayed in step S14, the flow advances to step S16. Otherwise, the flow returns to step S14 while enabling return to step S4 by a predetermined operation on the salesperson terminal 6.

Step S16: When the final confirmation operation is executed for the contents of the finished commercial transaction document in step S15, all information contents (information items) set on the commercial transaction document are stored in the estimate information, purchase order information, or contract information in the negotiation information storage memory (database) 2 as the finished commercial transaction document for the customer. Unlike the temporary storage (provisional storage) in step S9, the storage processing in this step is done to store, in the database 2, the formal commercial transaction document to which both the salesperson and the customer have agreed. The series of operations until the confirmation operation for the individual information contents (information items) is executed in step S9 are stored in the same database as negotiation log information corresponding to the commercial transaction document. In a preferred embodiment, the negotiation log information preferably contains the voice information or image information exchanged between the user terminal 5 and the salesperson terminal 6.

According to the above-described embodiment, an appropriate commercial transaction document can be prepared when the provider who provides merchandise or a service and the receiver who receives it do remote negotiation through a communication environment.

More specifically, according to this embodiment, in remote negotiation, the windows (Figs. 3 and 4) of a predetermined format corresponding to a commercial transaction document such as an estimate, contract, or purchase order are presented on both the salesperson terminal 6 (first operation terminal) used by the salesperson as the provider of merchandise or a service and the user terminal 5 (second operation terminal) used by the customer (prospective buyer or user) as the receiver of the merchandise or service. As necessary information contents are input on the salesperson terminal 6 by the salesperson, the input information contents are also reflected to the user terminal 5. Hence, the customer can recognize them in real time.

Even in remote negotiation between the salesperson and the customer, real-time face-to-face negotiation is realized. The salesperson can take the initiative in negotiation while properly recognizing items to which both parties have agreed as detailed information contents on the windows corresponding to the commercial transaction document. For this reason, the possibility of failure of commercial transaction document preparation due to communication errors between the salesperson and the customer can be minimized. That is, an appropriate commercial transaction document can be prepared, and the substantial convenience of remote negotiation can be enjoyed.

According to this embodiment, even when the salesperson takes the initiative in negotiation, as described above, input of the next information contents is restricted unless the receiver approves the individual information contents in step S9. For this reason, an appropriate commercial transaction document can be prepared on the basis of the agreement between the salesperson and the customer.

According to this embodiment, information contents input on one operation terminal are appropriately emphasized by voice output or highlighting on the other operation terminal in step S8. Hence, the information contents can properly be grasped, and an appropriate commercial transaction document can be prepared on the basis of the agreement between the salesperson and the customer.

According to this embodiment, in step S14, both the salesperson and the customer can see the commercial transaction document in which all the input information contents are displayed at once and finally confirm the transaction contents which are specified by the commercial transaction document finished by all the input information contents. In addition, the customer can express his/her intention as a real action by executing the confirmation operation in step S15 (i.e., record the negotiation log information). Hence, an appropriate commercial transaction document can be prepared on the basis of the agreement between the salesperson and the customer.

### [Second Embodiment]

The second embodiment based on the above-described remote negotiation apparatus according to the first embodiment will be described next. For the same arrangement as in the first embodiment, a repetitive description thereof will be omitted. Characteristic parts of the second embodiment will mainly be described.

In the above-described first embodiment, a commercial transaction document is prepared under the initiative of a salesperson. In the second embodiment, since a commercial transaction document is prepared under the initiative of a customer who uses a user terminal 5, some of the procedures of commercial transaction document preparation processing in steps III and IV of remote negotiation processing (Fig. 2) are different from the first embodiment.

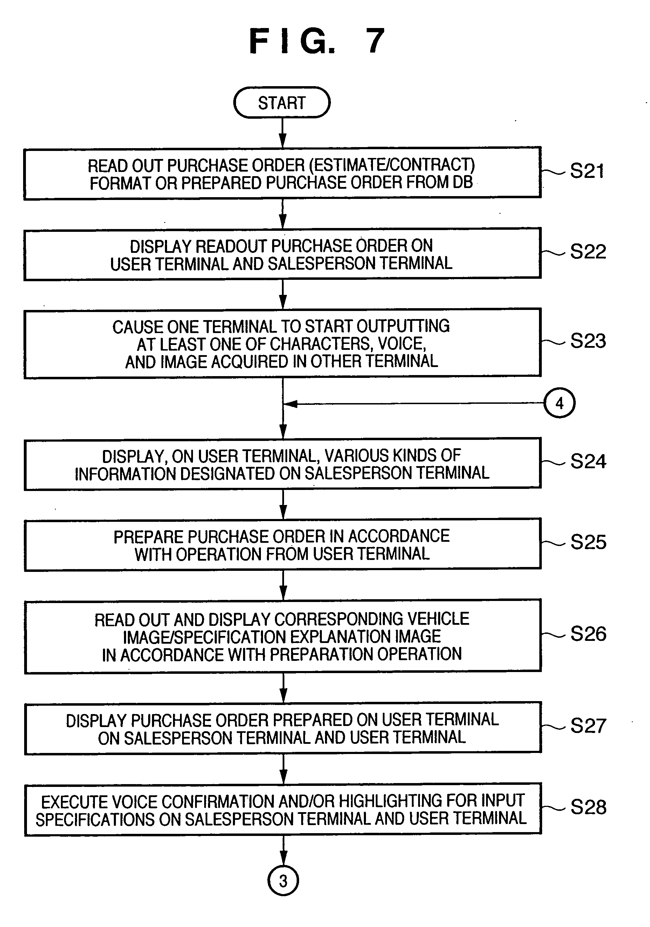

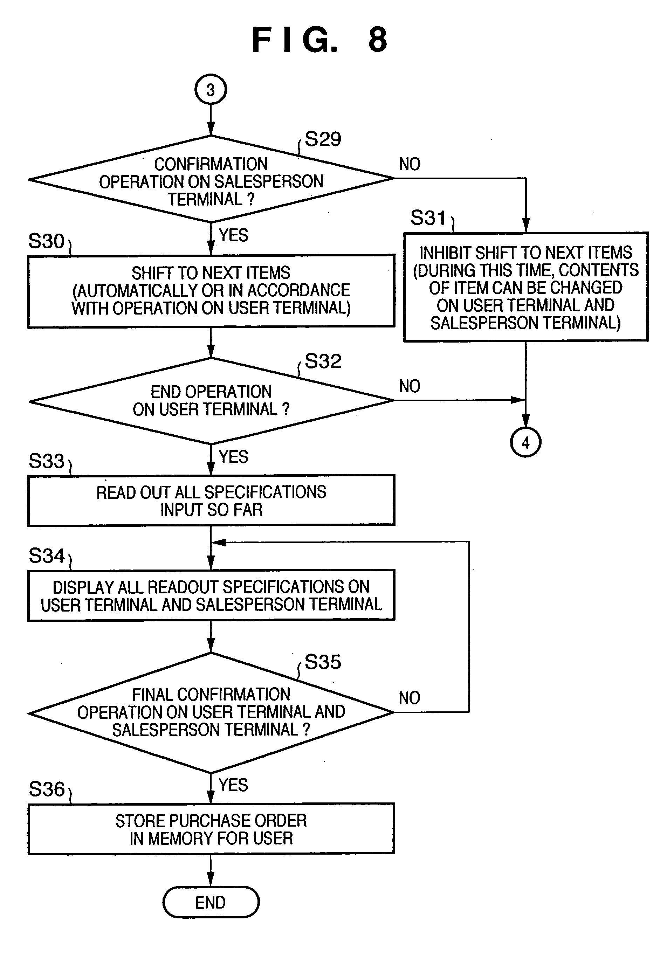

Figs. 7 and 8 are flow charts of commercial transaction document (estimate or contract) preparation processing according to the second embodiment. Figs. 7 and 8 show details of steps III and IV of remote negotiation processing (Fig. 2).

Referring to Fig. 7, steps S21 to S24: The same processing as in steps S1 to S4 of commercial transaction document preparation processing (Figs. 5 and 6) according to the first embodiment is executed.

Steps S25 and S26: In accordance with the input operation on the user terminal 5, information contents (information items) are set for the commercial transaction document to be prepared (step S25). In accordance with the input operation, a corresponding vehicle image or specification explanation image is displayed in a display area of a salesperson terminal 6 (step S26).

Step S27: In accordance with the input operation on the user terminal 5, the same information contents (information items) for the commercial transaction document to be prepared are displayed in display areas 24 in the display windows (Figs. 3 and 4) of the salesperson terminal 6 and user terminal 5.

Step S28: Voice output or highlighting is done on both the user terminal 5 and the salesperson terminal 6 to call the attention of both the customer and the salesperson to the information contents (information items) displayed in step S27.

Step S29: When an OK button 16 is operated on the salesperson terminal 6 as a confirmation operation for the voice output or highlighting in step S28, the information contents (information items) that are confirmed are additionally temporarily stored (provisionally stored) in the area for the customer in a negotiation information storage memory (database) 2 as estimate information, purchase order information, or contract information. Then, the flow advances to step S30. If the confirmation operation is not executed, the flow advances to step S31.

Step S30: Since the confirmation operation is detected in step S29, a shift to the next information contents (information items) in the commercial transaction document to be prepared is permitted by, e.g., changing the display position of the prompt automatically or in accordance with a predetermined operation on the user terminal 5.

Step S31: Since the confirmation operation is not detected in step S29, the shift to the next information contents (information items) is restricted to the contrary to step S30. The flow returns to step S24. At this time, information contents of interest can be changed in the user terminal 5 and salesperson terminal 6.

Step S32: When an operation button 14 is operated (clicked on) on the display window (Fig. 4) of the user terminal 5 to indicate that input to the commercial transaction document to be prepared is completed (ended), the flow advances to step S33. Otherwise, the flow returns to step S24.

Steps S33 and S34: When the same processing in steps S12 and S13 of the commercial transaction document preparation processing (Figs. 5 and 6) according to the first embodiment is executed, the finished commercial transaction document is displayed on the user terminal 5 and salesperson terminal 6.

Step S35: When, e.g., the OK button 16 is operated on both the display window (Fig. 3) of the salesperson terminal 6 and the display window (Fig. 4) of the user terminal 5 to execute the final confirmation operation for the contents of the finished commercial transaction document, which are displayed in step S34, the flow advances to step S36. Otherwise, the flow returns to step S34 while enabling return to step S24 by a predetermined operation on the user terminal 5 and salesperson terminal 6.

Step S36: When the same processing as in step S16 of the commercial transaction document preparation processing (Figs. 5 and 6) according to the first embodiment is executed, all information contents (information items) set on the commercial transaction document are stored in the estimate information, purchase order information, or contract information in the negotiation information storage memory (database) 2 as the finished commercial transaction document for the customer. In this embodiment as well, unlike the temporary storage (provisional storage) in step S29, the storage processing in step S36 is done to store, in the database 2, the formal commercial transaction document to which both the salesperson and the customer have agreed. The series of operations until the confirmation operation for the individual information contents (information items) is executed in step S29 are stored in the same database as negotiation log information corresponding to the commercial transaction document. In a preferred embodiment, the negotiation log information preferably contains the voice information or image information exchanged between the user terminal 5 and the salesperson terminal 6.

According to the above-described embodiment, an appropriate commercial transaction document can be prepared when the provider who provides merchandise or a service and the receiver who receives it do remote negotiation through a communication environment.

More specifically, according to this embodiment, in remote negotiation, the windows (Figs. 3 and 4) of a predetermined format corresponding to a commercial transaction document such as an estimate, contract, or purchase order are presented on both the salesperson terminal 6 (first operation terminal) used by the salesperson as the provider of merchandise or a service and the user terminal 5 (second operation terminal) used by the customer (prospective buyer or user) as the receiver of the merchandise or service. As necessary information contents are input on the user terminal 5 by the customer, the input information contents are also reflected to the salesperson terminal 6. Hence, the salesperson can recognize them in real time.

Even in remote negotiation between the salesperson and the customer, real-time face-to-face negotiation is realized. The customer can take the initiative in negotiation while properly recognizing items to which both parties have agreed as detailed information contents on the windows corresponding to the commercial transaction document. If the salesperson does not perform the approval operation (step S29), input of the next information contents by the customer is restricted. Even when the customer who is taking the initiative in negotiation is not familiar to the contents of the commercial transaction document, the salesperson can appropriately assist him/her to input necessary information contents. For this reason, the possibility of failure of commercial transaction document preparation due to communication errors between the salesperson and the customer can be minimized. That is, an appropriate commercial transaction document can be prepared, and the substantial convenience of remote negotiation can be enjoyed.

According to this embodiment, information contents input on one operation terminal are appropriately emphasized by voice output or highlighting on the other operation terminal in step S8. Hence, the information contents can properly be grasped, and an appropriate commercial transaction document can be prepared on the basis of the agreement between the salesperson and the customer.

According to this embodiment, in step S34, both the salesperson and the customer can see the commercial transaction document in which all the input information contents are displayed at once and finally confirm the transaction contents which are specified by the commercial transaction document finished by all the input information contents. In addition, the customer and salesperson can express their intention as a real action by executing the confirmation operation in step S35 (i.e., record the negotiation log information). Hence, an appropriate commercial transaction document can be prepared on the basis of the agreement between the salesperson and the customer.

In the above-described embodiments, the present invention is applied to a communication environment between information processing apparatuses such as computers, PDAs and cellular phones using network communication. However, the present invention is not limited to this configuration. The present invention can also suitably be applied to various TV systems such as cable TVs and high-definition TVs capable of two-way communication.

The present invention described in the above embodiments is achieved by supplying a computer program capable of implementing the functions of the flow charts referred to in the description to the above-described remote negotiation system 1 and causing the CPU of the apparatus that constitutes the system to read out and execute the program. The computer program supplied to the apparatus is stored in a storage device such as a readable/writable memory or a hard disk device.

In this case, to supply the computer program to the apparatus, general procedures can be employed now by, e.g., installing the program in the apparatus through various recording media such as a flexible disk or downloading the program from an external device through a communication line such as the Internet. In such a case, the present invention is constituted by the codes of the computer program or a storage medium.

As many apparently widely different embodiments of the present invention can be made without departing from the spirit and scope thereof, it is to be understood that the invention is not limited to the specific embodiments thereof except as defined in the appended claims.

## Claims

1. A remote negotiation apparatus which causes, before providing a service including sales of merchandise, a provider of the service and a receiver to do remote negotiation through a communication environment, **characterized by** comprising:
a control unit which displays a window of a predetermined format corresponding to a commercial transaction document related to providing of the service on both a first operation terminal(6) used by the provider and a second operation terminal(5) used by the receiver and, as information contents necessary for finishing the commercial transaction document are input by the provider to the window displayed on the first operation terminal(6), reflects the input information contents to the window displayed on the second operation terminal(5) to present the information contents to the receiver.

2. The apparatus according to claim 1, **characterized in that** said control unit requests an approval operation by the provider for each of the information contents before reflecting the input information contents to the window displayed on the first operation terminal(6), and when the approval operation is not performed, restricts the receiver to input the next information contents necessary for finishing the commercial transaction document to the window displayed on the second operation terminal(5).

3. The apparatus according to claim 1 or 2, **characterized in that** said control unit requests an approval operation by the receiver for each of the information contents before reflecting the input information contents to the window displayed on the second operation terminal(5), and when the approval operation is not performed, restricts the provider to input the next information contents necessary for finishing the commercial transaction document to the window displayed on the first operation terminal(6).

4. The apparatus according to claim 1, 2 or 3, **characterized in that** every time the information contents necessary for finishing the commercial transaction document are input, said control unit executes at least one of voice output and highlighting related to the information contents on one of the first and second operation terminals(6,5), on which the window to which the input information contents should be reflected is displayed.

5. The apparatus according to claim 1, 2, 3 or 4, **characterized in that** when all information contents necessary for finishing the commercial transaction document are input, said control unit displays all the input information contents on the first and second operation terminals(6,5) at once and requests a confirmation operation for transaction contents specified by the commercial transaction document finished by all the input information contents.

6. The apparatus according to one of the preceding claims , **characterized in that** the commercial transaction document is at least one of an estimate, a contract, and a purchase order which decides an amount related to providing of the merchandise.

7. A remote negotiation method of causing, before providing merchandise including a service, a provider of the merchandise and a receiver to do remote negotiation through a communication environment, **characterized by** comprising:
a step of displaying a window of a predetermined format corresponding to a commercial transaction document related to providing of the merchandise on both a first operation terminal(6) used by the provider and a second operation terminal(5) used by the receiver; and
a reflection step of, as information contents necessary for finishing the commercial transaction document are input by the provider to the window displayed on the first operation terminal(6), reflecting the input information contents to the window displayed on the second operation terminal(5).

8. The method according to claim 7, **characterized in that** the method further comprises steps of
when the information contents necessary for finishing the commercial transaction document are input by the receiver to the window displayed on the second operation terminal(5), requesting an approval operation by the provider for each of the information contents, and
when the approval operation is not performed, restricting the receiver to input the next information contents necessary for finishing the commercial transaction document to the window displayed on the second operation terminal(5), and
the reflection step reflects the input information contents to the window displayed on the first operation terminal(6) when the approval operation is performed.

9. A program which causes a computer to execute a method of claim 7 or 8.
